# FASCICULE DE BREVET EUROPEEN

(11) **EP 3 558 704 B1**
(45) Date de publication et mention de la délivrance du brevet: **24.02.2021**
(21) Numéro de dépôt: 17829254.6
(22) Date de dépôt: 19.12.2017
(51) Int. Cl.: B60C 1/00, C08L 15/00

(54) **COMPOSITION DE CAOUTCHOUC COMPRENANT UN ÉLASTOMÈRE DIÉNIQUE MODIFIÉ**
KAUTSCHUKZUSAMMENSETZUNG MIT EINEM MODIFIZIERTEN DIENELASTOMER
RUBBER COMPOSITION COMPRISING A MODIFIED DIENE ELASTOMER

(30) Priorité: 20.12.2016 FR 1662865
(43) Date de publication de la demande: 30.10.2019
(73) Titulaire: Compagnie Générale des Etablissements Michelin, 63000 Clermont-Ferrand (FR)
(72) Inventeur: FRANCOIS, Marie-Laure, 63040 Clermont-Ferrand Cedex 9 (FR); DE-GAUDEMARIS, Benoît, 63040 Clermont-Ferrand Cedex 9 (FR)
(74) Mandataire: Le Cam, Véronique Marie Christine
(86) Numéro de dépôt international: PCT/FR2017/053704
(87) Numéro de publication internationale: WO 2018/115722

(56) Documents cités:
- WO-A1-2015/018599
- FR-A1- 2 930 554

## Description

L'invention se rapporte à une composition de caoutchouc comprenant un élastomère diénique modifié par un groupe alcoxysilane, éventuellement partiellement ou totalement hydrolysé en silanol, porteur ou non d'une autre fonction. L'invention concerne également un pneumatique pour véhicule comprenant une telle composition.

Depuis que les économies de carburant et la nécessité de protéger l'environnement sont devenues une priorité, il est souhaitable de produire des polymères possédant de bonnes propriétés mécaniques et une hystérèse aussi faible que possible afin de pouvoir les mettre en œuvre sous forme de compositions de caoutchouc utilisables pour la fabrication de divers produits semi-finis entrant dans la constitution de pneumatiques tels que, notamment, des bandes de roulement directement en contact avec le sol et obtenir des pneumatiques aux propriétés améliorées, notamment possédant une résistance au roulement réduite.

La réduction de l'hystérèse des mélanges est un objectif permanent qui doit toutefois ne pas se faire au détriment des autres propriétés des mélanges.

Pour atteindre l'objectif de baisse d'hystérèse, de nombreuses solutions ont déjà été expérimentées. En particulier, on peut citer la modification de la structure des polymères et des copolymères diéniques en fin de polymérisation au moyen d'agents de fonctionnalisation, de couplage ou d'étoilage dans le but d'obtenir une bonne interaction entre le polymère ainsi modifié et la charge renforçante quelle qu'elle soit.

Dans le cadre de mélanges contenant une charge inorganique renforçante de type siliceuse, il a notamment été proposé d'utiliser des polymères diéniques fonctionnalisés par des dérivés alcoxysilanes.

Il est une préoccupation constante des concepteurs de matériaux destinés à la fabrication de pneumatiques d'améliorer les compromis de propriétés des mélanges, notamment de diminuer leur hystérèse en vue de réduire davantage la résistance au roulement des pneumatiques.

Poursuivant leurs recherches, les Demanderesses ont découvert de manière surprenante que l'utilisation dans une composition de caoutchouc de certains élastomères spécifiques modifiés permet de baisser l'hystérèse de cette composition par rapport à une composition comprenant des élastomères de même microstructure mais de macrostructure différente.

L'invention a donc pour objet une composition de caoutchouc à base d'au moins une charge renforçante, un système de réticulation, un système plastifiant et une matrice élastomère comprenant au moins un élastomère diénique modifié comprenant au sein de sa structure au moins un groupe alcoxysilane, éventuellement partiellement ou totalement hydrolysé en silanol, lié à l'élastomère par l'atome de silicium, le groupe alcoxysilane étant porteur ou non d'une autre fonction liée à l'atome de silicium directement ou par l'intermédiaire d'un groupe espaceur, lequel élastomère diénique modifié est tel qu'avant modification l'élastomère diénique présente un indice de polymolécularité d'au moins 1, 1 et d'au plus 1,6, et présente une viscosité Mooney variant de 50 à 80 et une température de transition vitreuse (Tg) inférieure ou égale à -60°C, et supérieure ou égale à -110°C.

L'invention a aussi pour objet un pneumatique qui comprend la bande de roulement conforme à l'invention.

L'invention a aussi pour objet un procédé pour préparer la composition de caoutchouc conforme à l'invention.

L'invention a également pour objet un procédé pour préparer la bande de roulement conforme à l'invention.

### DESCRIPTION DETAILLEE DE L'INVENTION

Dans la présente description, sauf indication expresse différente, tous les pourcentages (%) indiqués sont des % en masse. L'abréviation "pce" signifie parties en poids pour cent parties d'élastomères présents dans la matrice élastomère, la matrice élastomère désignant la totalité des élastomères présents dans la composition de caoutchouc.

D'autre part, tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b).

Dans la présente demande, par "majoritairement" ou "majoritaire" en liaison avec un composé, on entend que ce composé est majoritaire parmi les composés du même type dans la composition, c'est-à-dire que c'est celui qui représente la plus grande fraction pondérale parmi les composés du même type. Ainsi, par exemple, un élastomère majoritaire est l'élastomère représentant la plus grande fraction pondérale par rapport au poids total des élastomères dans la composition. De la même manière, une charge dite majoritaire est celle représentant la plus grande fraction pondérale par rapport au poids total de l'ensemble des charges de la composition. Egalement, une espèce fonctionnelle d'un élastomère diénique modifié dite majoritaire est celle représentant la plus grande fraction pondérale parmi les espèces fonctionnalisées constituant l'élastomère diénique, par rapport au poids total de l'élastomère diénique modifié. Dans un système comprenant un seul composé d'un certain type, celui-ci est majoritaire au sens de la présente invention.

Par l'expression composition "à base de", il faut entendre dans la présente description une composition comportant le mélange et/ou le produit de réaction in situ des différents constituants utilisés, certains de ces constituants de base (par exemple l'élastomère, la charge ou autre additif classiquement utilisé dans une composition de caoutchouc destinée à la fabrication de pneumatique) étant susceptibles de, ou destinés à réagir entre eux, au moins en partie, lors des différentes phases de fabrication de la composition destinée à la fabrication de pneumatique.

Dans la présente description, la notion de groupe fonctionnel comprenant au moins un atome de silicium situé au sein de la structure de l'élastomère s'entend comme un groupe situé dans le squelette du polymère et relié à celui-ci par le seul atome de silicium. Ce positionnement au sein de la structure comprend les extrémités de chaînes polymères. Ainsi, le groupement terminal est inclus dans cette notion.

Lorsque le groupe fonctionnel se situe en bout de chaîne, on dira alors que l'élastomère diénique est fonctionnalisé en bout ou extrémité de chaîne.

Lorsque le groupe fonctionnel se situe dans la chaîne élastomère principale, on dira alors que l'élastomère diénique est couplé ou encore fonctionnalisé en milieu de chaîne, par opposition à la position "en extrémité de chaîne" et bien que le groupement ne se situe pas précisément au milieu de la chaîne élastomère. L'atome de silicium de cette fonction lie les deux branches de la chaîne principale de l'élastomère diénique.

Lorsque le groupe fonctionnel est en position centrale auquel au moins trois branches élastomères sont liées formant une structure en étoile de l'élastomère, on dira alors que l'élastomère diénique est étoilé. L'atome de silicium de cette fonction lie les au moins trois branches de l'élastomère diénique entre elles.

Il convient de préciser qu'il est connu de l'homme du métier que lorsqu'un élastomère est modifié par réaction d'un agent de fonctionnalisation possédant plus d'un site réactif sur l'élastomère vivant issu d'une étape de polymérisation anionique, on obtient un mélange d'espèces modifiées de cet élastomère dont la composition dépend des condition de la réaction de modification et notamment du nombre de sites réactifs de l'agent de fonctionnalisation et leur proportion par rapport au nombre de chaînes élastomères vivantes. Ce mélange comprend des espèces fonctionnalisées en extrémité de chaîne, couplées, étoilées et/ou non fonctionnalisées.

Dans la présente description, on définit par l'expression «élastomère diénique linéaire fonctionnalisé », l'ensemble des espèces fonctionnalisées linéaires, c'est-à-dire l'élastomère diénique fonctionnalisé en bout ou extrémité de chaîne et l'élastomère diénique fonctionnalisé en milieu de chaîne ou couplé.

Ainsi, la composition de caoutchouc selon l'invention est à base d'au moins une charge renforçante, un système de réticulation, un système plastifiant et une matrice élastomère comprenant au moins un élastomère diénique modifié comprenant au sein de sa structure au moins un groupe alcoxysilane, éventuellement partiellement ou totalement hydrolysé en silanol, lié à l'élastomère par l'atome de silicium, le groupe alcoxysilane étant porteur ou non d'une autre fonction liée à l'atome de silicium directement ou par l'intermédiaire d'un groupe espaceur, lequel élastomère diénique modifié:
- présente une viscosité Mooney variant de 50 à 80,
- présente une température de transition vitreuse (Tg) inférieure ou égale à -60°C, et supérieure ou égale à -110°C
- est tel qu'avant modification l'élastomère diénique présente un indice de polymolécularité d'au moins 1, 1 et d'au plus 1,6.

La matrice élastomère de la composition de caoutchouc conforme à l'invention comprend un élastomère diénique modifié comprenant au sein de sa structure au moins un groupe alcoxysilane, liée à l'élastomère par l'intermédiaire de l'atome de silicium, porteur ou non d'une autre fonction.

Par élastomère diénique, doit être compris de manière connue un (on entend un ou plusieurs) élastomère issu au moins en partie (i.e., un homopolymère ou un copolymère) de monomères diènes (monomères porteurs de deux doubles liaisons carbone-carbone, conjuguées ou non). Plus particulièrement, par élastomère diénique, on entend tout homopolymère obtenu par polymérisation d'un monomère diène conjugué ayant 4 à 12 atomes de carbone, ou tout copolymère obtenu par copolymérisation d'un ou plusieurs diènes conjugués entre eux ou avec un ou plusieurs composés vinylaromatiques ayant de 8 à 20 atomes de carbone.

A titre de diènes conjugués utilisables dans le procédé conforme à l'invention conviennent notamment le butadiène-1,3, le 2-méthyl-1,3-butadiène, les 2,3 di(alcoyle en C1 à C5)-1,3-butadiène tels que par exemple le 2,3-diméthyl-1,3-butadiène, 2,3-diéthyl-1,3-butadiène, 2-méthyl-3-éthyl-1,3-butadiène, le 2-méthyl-3-isopropyl-1,3-butadiène, le phényl-1,3-butadiène, le 1,3-pentadiène et le 2,4 hexadiène, etc.

A titre de composés vinylaromatiques conviennent notamment le styrène, l'ortho-, méta, para-méthylstyrène, le mélange commercial "vinyltoluène", le para-tertiobutylstyrène, les méthoxystyrènes, le vinylmésitylène, le divinylbenzène et le vinylnaphtalène, etc.

L'élastomère diénique est choisi préférentiellement dans le groupe des élastomères diéniques fortement insaturés constitué par les polybutadiènes (BR), les polyisoprènes (IR) de synthèse, les copolymères de butadiène, en particulier les copolymères de butadiène et d'un monomère vinyl aromatique, les copolymères d'isoprène et les mélanges de ces élastomères. De tels copolymères sont plus particulièrement des copolymères de butadiène-styrène (SBR), des copolymères d'isoprène-butadiène (BIR), des copolymères d'isoprène-styrène (SIR) et des copolymères d'isoprène-butadiène-styrène (SBIR). Parmi ces polymères, les copolymères de butadiène-styrène (SBR) sont particulièrement préférés.

L'élastomère diénique peut avoir toute microstructure qui est fonction des conditions de polymérisation utilisées, en tenant compte des caractéristiques imposées par la Tg de l'élastomère. L'élastomère peut être à blocs, statistique, séquencé, microséquencé, etc .... Dans le cas d'un copolymère à base d'un diène et d'un vinyl aromatique, notamment contenant du butadiène et du styrène, préférentiellement les deux monomères sont répartis statistiquement.

Conviennent particulièrement à titre de copolymère de butadiène-styrène, un copolymère de butadiène-styrène présentant un taux d'unité vinylique par rapport à la portion diénique allant de 8 à 25% en poids, de préférence allant de 10 à 25% en poids, et une teneur en styrène d'au plus 20%.

Conviennent également particulièrement à titre de copolymère de butadiène-styrène, un copolymère de butadiène-styrène présentant un taux d'unité vinylique par rapport à la portion diénique allant de 8 à 15% en poids, de préférence allant de 10 à 15% en poids, et une teneur en styrène d'au plus 5% .

Selon certaines variantes de l'invention, l'élastomère diénique modifié présente une température de transition vitreuse (Tg) supérieure ou égale à -110°C et inférieure à -95°C.

Selon d'autres variantes de l'invention, l'élastomère diénique modifié présente une température de transition vitreuse (Tg) supérieure ou égale à -95°C et inférieure à -80°C.

Selon d'autres variantes encore de l'invention, l'élastomère diénique modifié présente une température de transition vitreuse (Tg) supérieure ou égale à - 80°C et inférieure à -60°C.

L'élastomère diénique modifié selon l'invention comprend au sein de sa structure au moins un groupe alcoxysilane lié à l'élastomère par l'intermédiaire de l'atome de silicium, celui-ci étant porteur ou non d'une autre fonction.

Préférentiellement, l'élastomère diénique est constitué majoritairement de chaine fonctionnalisé en milieu de chaines.

Selon une mise en œuvre particulièrement avantageuse de l'invention, l'élastomère diénique modifié comprend au moins 70% en poids par rapport au poids total de l'élastomère diénique modifié, d'élastomère diénique linéaire fonctionnalisé par un groupe alcoxysilane lié à l'élastomère par l'intermédiaire de l'atome de silicium, celui-ci étant porteur ou non d'une autre fonction. Préférentiellement, l'élastomère diénique modifié comprend au moins 75%, voire 80% en poids par rapport au poids total de l'élastomère diénique modifié, d'élastomère diénique linéaire fonctionnalisé.

Selon cette mise en œuvre, l'élastomère diénique linéaire fonctionnalisé est de préférence majoritairement fonctionnalisé en milieu de chaîne par le groupe alcoxysilane, éventuellement partiellement ou totalement hydrolysé en silanol, l'atome de silicium liant les deux branches de l'élastomère diénique. Plus préférentiellement encore, l'élastomère diénique fonctionnalisé en milieu de chaîne par un groupe alcoxysilane, représente au moins 80% en poids de l'élastomère diénique linéaire fonctionnalisé.

Selon cette mise en œuvre de l'invention, l'élastomère diénique modifié comprend avantageusement au plus 30% en poids, par rapport au poids total de l'élastomère diénique modifié, d'un l'élastomère diénique étoilé à l'étain ou au silicium. Préférentiellement alors, l'élastomère diénique modifié selon l'invention comprend au plus 25%, voire au plus 20% en poids, par rapport au poids total de l'élastomère diénique modifié, de l'élastomère diénique étoilé. Préférentiellement également, l'élastomère diénique modifié comprend au moins 5% en poids par rapport au poids total de l'élastomère diénique modifié, de l'élastomère diénique étoilé à l'étain ou au silicium.

Selon cette autre mise en œuvre de l'invention, l'élastomère diénique étoilé est avantageusement un l'élastomère diénique étoilé au silicium. Préférentiellement, l'atome de silicium substitué par trois branches de l'élastomère diénique, est porteur d'une autre fonction.

Selon une mise en œuvre particulièrement préférée de l'invention, dans le groupe alcoxysilane, l'atome de silicium est substitué par un ou deux groupements alcoxy de formule R'O-, éventuellement partiellement ou totalement hydrolysé en hydroxyle. où R' représente un groupe alkyle, substitué ou non substitué, en C₁-C₁₀, voire en C₁-C₈, de préférence un groupe alkyle en C₁-C₄, plus préférentiellement méthyle et éthyle.

L'élastomère diénique modifié selon l'invention comprend également au moins une autre fonction. Cette autre fonction s'entend comme comprenant au moins un hétéroatome choisi parmi N, S, O, P. On peut, à titre d'exemple, citer parmi ces fonctions les amines primaires, secondaires ou tertiaires, cycliques ou non, les isocyanates, les imines, les cyano, les thiols, les carboxylates, les époxydes, les phosphines primaires, secondaires ou tertiaires.

Ainsi, à titre de fonction amine secondaire ou tertiaire, on peut citer les amines substituées par des radicaux alkyle en C₁-C₁₀, de préférence alkyle en C1-C4, plus préférentiellement un radical méthyle ou éthyle, ou alors les amines cycliques formant un hétérocycle contenant un atome d'azote et au moins un atome de carbone, de préférence de 2 à 6 atomes de carbone. Par exemple, conviennent les groupements métylamino-, diméthylamino-, éthylamino-, diéthylamino-, propylamino-, dipropylamino-, butylamino-, dibutylamino-, pentylamino-, dipentylamino-, hexylamino-, dihexylamino-, hexaméthylèneamino-, de préférence les groupements diéthylamino- et diméthylamino-.

A titre de fonction imine, on peut citer les cétimines. Par exemple, conviennent les groupements (1,3-diméthylbutylidène)amino-, (éthylidène)amino-, (1-méthylpropylidène)amino-, (4-N,N-diméthylaminobenzylidène)amino-, (cyclohexylidène)amino-, dihydroimidazole et imidazole.

Ainsi, à titre de fonction carboxylate, on peut citer les acrylates ou les méthacrylates. Une telle fonction est de préférence un méthacrylate.

A titre de fonction époxyde, on peut citer les groupements époxy ou glycidyloxy.

A titre de fonction phosphine secondaire ou tertiaire, on peut citer les phosphines substituées par des radicaux alkyle en C₁-C₁₀, de préférence alkyle en C1-C4, plus préférentiellement un radical méthyle ou éthyle, ou alors la diphénylphosphine. Par exemple, conviennent les groupements métylphosphino-, diméthylphosphino-, éthylphosphino-, diéthylphosphino, éthylméthylphosphino- et diphénylphosphino-.

Selon la deuxième variante de l'invention, l'autre fonction peut être directement liée à l'atome de silicium lui-même directement lié à l'élastomère diénique.

Selon la deuxième variante de l'invention, l'autre fonction et l'atome de silicium directement lié à l'élastomère diénique peuvent être liés par l'intermédiaire d'un groupement espaceur qui peut être un atome ou un groupe d'atomes. Le groupement espaceur peut être un radical hydrocarboné divalent, linéaire ou ramifié, aliphatique en C1-C18, saturé ou non, cyclique ou non, ou un radical hydrocarboné divalent aromatique en C6-C18 et peut contenir un ou plusieurs radicaux aromatiques et/ou un ou plusieurs hétéroatomes. Le radical hydrocarboné peut éventuellement être substitué.

De manière préférée, le groupement espaceur est un radical hydrocarboné divalent, linéaire ou ramifié, aliphatique en C1-C18, plus préférentiellement encore le radical hydrocarboné divalent linéaire en C2 ou C3.

Les différents aspects, préférentiels ou non, qui précèdent et qui concernent notamment la nature de l'autre fonction, la nature du groupement espaceur, la nature de l'élastomère diénique, la nature du groupe alcoxysilane et les proportions des différentes espèces, sont combinables entre eux sous réserve de leur compatibilité.

Ainsi, selon une mise en œuvre particulièrement avantageuse de l'invention, l'élastomère diénique modifié présente au moins une quelconque des caractéristiques suivantes, voire deux au moins, trois au moins, quatre au moins ou cinq au moins, et de préférence toutes :
- l'élastomère diénique modifié comprend au moins 70%, de préférence au moins 75%, en poids de l'élastomère diénique linéaire fonctionnalisé majoritairement en milieu de chaîne, par rapport au poids total de l'élastomère diénique modifié
- l'élastomère diénique modifié comprend au plus 30%, de préférence au plus 25%, par rapport au poids total de l'élastomère diénique modifié, d'une espèce étoilée à trois branches par un groupe comprenant un atome de silicium porteur d'une autre fonction,
- l'autre fonction est une amine tertiaire, plus particulièrement un groupement diéthylamino- ou diméthylamino-,
- l'autre fonction est liée à l'atome de silicium par un groupement espaceur défini comme un radical hydrocarboné divalent linéaire, plus préférentiellement encore le radical hydrocarboné linéaire en C2 ou C3,
- la fonction alcoxysilane est un méthoxysilane ou éthoxysilane, éventuellement partiellement ou totalement hydrolysé en silanol,
- l'élastomère diénique est un polymère de butadiène, plus particulièrement un homopolymère de butadiène ou un copolymère butadiène-styrène.

Selon cette mise en œuvre, l'élastomère diénique modifié présente de préférence les caractéristiques suivantes
- le groupe alcoxysilane est porteur d'une fonction amine tertiaire, plus particulièrement un groupement diéthylamino- ou diméthylamino-,
- l'élastomère diénique étoilée comprend un atome de silicium porteur d'une fonction amine tertiaire, plus particulièrement un groupement diéthylamino- ou diméthylamino-,
- le groupement espaceur est un radical hydrocarboné linéaire en C3,
- le groupe alcoxysilane est un méthoxysilane ou éthoxysilane, éventuellement partiellement ou totalement hydrolysé en silanol,
- l'élastomère diénique est un copolymère butadiène-styrène,
- l'élastomère diénique modifié comprend au moins 75% en poids de l'élastomère diénique linéaire fonctionnalisé majoritairement en milieu de chaîne
- l'élastomère diénique modifié comprend au moins 5% en poids et au plus 25% en poids de l'élastomère diénique étoilé, par rapport au poids total de l'élastomère diénique modifié.

L'élastomère diénique modifié selon l'invention peut être obtenu par un procédé tel que décrit ci-après.

La première étape d'un procédé de préparation de l'élastomère diénique modifié est la polymérisation anionique d'au moins un monomère diène conjugué ou la polymérisation d'au moins un monomère diène conjugué et un monomère vinylaromatique, en présence d'un initiateur de polymérisation.

Les monomères sont tels que décrits plus haut.

En tant qu'initiateur de polymérisation, on peut utiliser tout initiateur anionique monofonctionnel connu. Toutefois un initiateur contenant un métal alcalin tel que le lithium est utilisé à titre préférentiel.

Comme initiateurs organolithiens conviennent notamment ceux comportant une liaison carbone-lithium. Des composés représentatifs sont les organolithiens aliphatiques tels que l'éthyllithium, le n-butyllithium (n-BuLi), l'isobutyllithium, etc ...

Selon la mise en œuvre de l'invention selon laquelle l'autre fonction est directement liée à la chaîne l'élastomère, celle-ci peut être apportée par l'initiateur de polymérisation. De tels initiateurs sont par exemple des initiateurs de polymérisation à fonction amine qui conduisent à des chaînes vivantes ayant un groupement amine à l'extrémité non réactive de la chaîne.

A titre d'initiateurs de polymérisation à fonction amine, on peut citer de manière préférée les amidures de lithium, produits de la réaction d'un composé organolithien, de préférence alkyllithien, et d'une amine secondaire acyclique ou cyclique, de préférence cyclique.

A titre d'amine secondaire utilisable pour préparer les initiateurs, on peut citer la diméthylamine, diéthylamine, dipropylamine, di-n-butylamine, di-sec-butylamine, dipentylamine, dihexylamine, di-n-octylamine, di-(2-ethylhexyl)amine, di-cyclohexylamine, N-méthylbenzylamine, diallylamine, morpholine, piperazine, 2,6-diméthylmorpholine, 2,6-diméthylpiperazine, 1-éthylpiperazine, 2-méthylpiperazine, 1-benzylpiperazine, piperidine, 3,3-diméthylpiperidine, 2,6-dimethylpiperidine, 1-méthyl-4-(méthylamino)piperidine, 2,2,6,6-tetraméthylpiperidine, pyrrolidine, 2,5-diméthylpyrrolidine, azetidine, hexaméthylèneimine, heptaméthylèneimine, 5-benzyloxyindole, 3-azaspiro[5,5]undecane, 3-aza-bicycle[3.2.2]nonane, carbazole, bistriméthylsilylamine, la pyrrolidine et l'hexaméthylèneamine. L'amine secondaire, lorsqu'elle est cyclique, est de préférence choisie parmi la pyrrolidine et l'hexaméthylèneamine.

Le composé alkyllithien est de préférence l'éthyllithium, le n-butyllithium (n-BuLi), l'isobutyllithium, etc.

La polymérisation est de préférence effectuée en présence d'un solvant hydrocarboné inerte qui peut être par exemple un hydrocarbure aliphatique ou alicyclique comme le pentane, l'hexane, l'heptane, l'iso-octane, le cyclohexane, le méthylcyclohexane ou un hydrocarbure aromatique comme le benzène, le toluène, le xylène.

La polymérisation peut être effectuée en continu ou en discontinu. La polymérisation en continu peut être effectuée de manière connue dans un ou plusieurs réacteurs supposés parfaitement agités par l'homme de l'art. Dans le cas de la polymérisation dans plusieurs réacteurs, le nombre de réacteurs varie en général de 2 à 15 et de préférence de 2 à 9.

On effectue généralement la polymérisation à une température variant de 20 °C à 150 °C et de préférence de 30 °C à 120 °C.

Selon une mise en œuvre du procédé en continu, la polymérisation peut être avantageusement réalisée dans plusieurs réacteurs en contrôlant et en équilibrant la conversion dans chaque réacteur. Par exemple, le maintien dans chaque réacteur d'un taux de conversion individuel dans un domaine de valeurs qui dépend du taux de conversion individuel théorique, calculé à partir du taux de conversion global en sortie de polymérisation divisé par le nombre de réacteurs, peut contribuer à l'obtention d'un indice de polymolécularité réduit d'au plus 1,6, et de minimum 1,1. De préférence alors, le taux de conversion individuel peut varier de plus ou moins 20% de la conversion globale par rapport à cette valeur théorique. Un tel procédé est par exemple décrit dans les documents WO2017001684 et WO2017001637.

Il est connu que le contrôle de la conversion dans chaque réacteur est notamment assuré par la température, le temps de séjour, la quantité d'agent polaire et la quantité de monomère entrant dans chaque réacteur.

L'équilibrage des conversions dans chaque réacteur, tel qu'indiqué précédemment, permet de minimiser l'indice de polymolécularité.

Selon une mise en œuvre du procédé en continu, la polymérisation dans plusieurs réacteurs en série peut être avantageusement effectuée en réalisant une rampe de température dans le domaine de températures indiqué plus haut, de sorte que la température dans chaque réacteur est supérieure ou égale à la température du réacteur qui le précède immédiatement, la température du dernier réacteur étant strictement supérieure à la température du premier réacteur.

Ces mises en œuvre du procédé de polymérisation en continu dans plusieurs réacteurs sont combinables entre elles.

La microstructure de l'élastomère peut être déterminée par la présence ou non d'un agent modifiant et/ou randomisant et les quantités d'agent modifiant et/ou randomisant employées. Préférentiellement, lorsque l'élastomère diénique est à base d'un diène et d'un vinyl aromatique, un agent polaire est utilisé lors de l'étape de polymérisation dans des quantités telles qu'il favorise la répartition statistique du vinyl aromatique le long des chaînes polymères.

De manière avantageuse, l'élastomère diénique vivant issu de la polymérisation est ensuite fonctionnalisé au moyen d'un agent de fonctionnalisation susceptible d'introduire un groupe alcoxysilane au sein de la structure polymère pour préparer l'élastomère diénique modifié selon l'invention.

Selon une variante possible de préparation de l'élastomère diénique modifié selon l'invention, la réaction de modification de l'élastomère diénique vivant, obtenu à l'issue de la première étape, peut se dérouler à une température comprise entre - 20°C et 100 C, par addition sur les chaînes polymères vivantes ou inversement d'un agent de fonctionnalisation non polymérisable susceptible de former un groupe alcoxysilane, l'atome de silicium s'intégrant au sein de la chaîne élastomère, porteur ou non d'une fonction. Les agents de fonctionnalisation sont porteurs de fonctions réactives vis-à-vis de l'élastomère vivant.

Ainsi, selon une variante préférée du procédé de synthèse de l'élastomère diénique modifié de l'invention, l'agent de fonctionnalisation répond à la formule :

(Y)_{d} Si(R)ₑX

dans laquelle,
Y représente une fonction réactive vis-à-vis de l'élastomère vivant choisi parmi les atomes d'halogènes, de préférence l'atome de chlore, les radicaux alcoxyle, éventuellement partiellement ou totalement hydrolysable, de formule -OR', R' représentant un radical alkyle, les radicaux alkyle, substitués ou non substitués, étant en C₁-C₁₀, voire en C₁-C₈, de préférence un groupe alkyle en C₁-C₄, plus préférentiellement méthyle et éthyle ;
les radicaux R, identiques ou différents, représentent des radicaux alkyle, substitués ou non substitués, en C₁-C₁₀, voire en C₁-C₈, de préférence un groupe alkyle en C₁-C₄, plus préférentiellement méthyle et éthyle ;
X représente un groupement comprenant une autre fonction;
d vaut 1, 2 ou 3, e vaut 0, 1 ou 2, sous réserve que d+e =3.

L'autre fonction est telle que définie plus haut.

Selon une variante de l'invention, l'autre fonction est une amine primaire, protégée ou non, secondaire, protégée ou non, ou tertiaire. L'atome d'azote peut alors être substitué par deux groupements, identiques ou différents, pouvant être un radical trialkyl silyl, le groupement alkyle ayant 1 à 4 atomes de carbone, ou un radical alkyle en C₁-C₁₀, de préférence alkyle en C₁-C₄, plus préférentiellement un radical méthyle ou éthyle, ou alors les deux substituants de l'azote forment avec celui-ci un hétérocycle contenant un atome d'azote et au moins un atome de carbone, de préférence de 2 à 6 atomes de carbone,

On peut citer par exemple à titre d'agent de fonctionnalisation les (N,N-dialkylaminoalkyl)trialcoxysilanes, les (N-alkylaminoalkyl)trialcoxysilanes dont la fonction amine secondaire est protégée par un groupement trialkyl silyl et les (aminoalkyl)trialcoxysilanes dont la fonction amine primaire est protégée par deux groupements trialkyl sily, le groupement alkyl permettant de lier la fonction amine au groupe trialcoxysilyle est le groupe espaceur tel que décrit plus haut, préférentiellement en C₂ ou C₃.

L'agent de fonctionnalisation peut être choisi parmi le 3-(N,N-diméthylaminopropyl)triméthoxysilane, le 3-(N,N-diméthylaminopropyl)triéthoxysilane , le 3-(N,N-diéthylaminopropyl)triméthoxysilane, le 3-(N,N-diéthylaminopropyl)triéthoxysilane, le 3-(N,N-dipropylaminopropyl)triméthoxysilane, le 3-(N,N-dipropylaminopropyl)triéthoxysilane, le 3-(N,N-dibutylaminopropyl)triméthoxysilane, le 3-(N,N-dibutylaminopropyl)triéthoxysilane, le 3-(N,N-dipentylaminopropyl)triméthoxysilane, le 3-(N,N-dipentylaminopropyl)triéthoxysilane, le 3-(N,N-dihexylaminopropyl)triméthoxysilane, le 3-(N,N-dihexylaminopropyl)triéthoxysilane, le 3-(hexamethylèneaminopropyl)triméthoxysilane, le 3-(hexamethylèneaminopropyl)triéthoxysilane, le 3-(morpholinopropyl)triméthoxysilane, le 3-(morpholinopropyl)triéthoxysilane, le 3-(piperidinopropyl)triméthoxysilane, le 3-(piperidinopropyl)triéthoxysilane. Plus préférentiellement, l'agent de fonctionnalisation est le 3-(N,N-diméthylaminopropyl)triméthoxysilane.

L'agent de fonctionnalisation peut être choisi parmi le 3-(N,N-méthyltriméthylsilylaminopropyl)triméthoxysilane, le 3-(N,N-méthyltriméthylsilylaminopropyl)triéthoxysilane, le 3-(N,N-éthyltriméthylsilylaminopropyl)triméthoxysilane, le 3-(N,N-éthyltriméthylsilylaminopropyl)triéthoxysilane, le 3-(N,N-propyltriméthylsilylaminopropyl)triméthoxysilane, le 3-(N,N-propyltriméthylsilylaminopropyl)triéthoxysilane. Plus préférentiellement, l'agent de fonctionnalisation est le 3-(N,N-méthyltriméthylsilylaminopropyl)triméthoxysilane.

L'agent de fonctionnalisation peut être choisi parmi le 3-(N,N-bistriméthylsilylaminopropyl)triméthoxysilane et le 3-(N,N-bistriméthylsilylaminopropyl)triéthoxysilane.. Plus préférentiellement, l'agent de fonctionnalisation est le 3-(N,N-bistriméthylsilylaminopropyl)triméthoxysilane.

Selon une variante avantageuse de l'invention, l'agent de fonctionnalisation est choisi parmi les (N,N-dialkylaminoalkyl)trialcoxysilanes ; plus particulière alors l'agent de fonctionnalisation est le 3-(N,N-diméthylaminopropyl)triméthoxysilane.

La fonction susceptible d'interagir avec une charge renforçante peut également être une fonction imine. Préférentiellement alors, l'agent de fonctionnalisation est choisi parmi le N-(1,3-diméthylbutylidène)-3-(triméthoxysilyl)-1-propanamine, le N-(1,3-diméthylbutylidène)-3-(triéthoxysilyl)-1-propanamine, le N-(1,3-méthyléthylidène)-3-(triméthoxysilyl)-1-propanamine, le N-(1,3-méthyléthylidène)-3-(triéthoxysilyl)-1-propanamine, le N-ethylidène-3-(triméthoxysilyl)-1-propanamine, le N-ethylidène-3-(triéthoxysilyl)-1-propanamine, le N-(1-méthylpropylidène)-3-(triméthoxysilyl)-1-propanamine, le N-(1-méthylpropylidène)-3-(triéthoxysilyl)-1-propanamine, le N-(4-N,N-diméthylaminobenzylidène)-3-(triméthoxysilyl)-1-propanamine, le N-(4-N,N-diméthylaminobenzylidène)-3-(triéthoxysilyl)-1-propanamine, le N-(cyclohexylidène)-3-(triméthoxysilyl)-1-propanamine, le N-(cyclohexylidène)-3-(triéthoxysilyl)-1-propanamine, le N-(3-triméthoxysilylpropyl)-4,5-dihydroimidazole, le N-(3-triéthoxysilylpropyl)-4,5-dihydroimidazole, le N-(3-triméthoxysilylpropyl)-4,5-imidazole, N-(3-triéthoxysilylpropyl)-4,5-imidazole.

La fonction susceptible d'interagir avec une charge renforçante peut également être une fonction cyano. Préférentiellement alors, l'agent de fonctionnalisation est choisi parmi le 3-(cyanopropyl)triméthoxysilane et le 3-(cyanopropyl)triéthoxysilane.

La fonction susceptible d'interagir avec une charge renforçante peut également être une fonction thiol, protégée ou non. On peut citer à titre d'exemple les (S-trialkylsilylmercaptoalkyll)trialcoxysilanes. Préférentiellement alors, l'agent de fonctionnalisation est choisi parmi le (S-triméthylsilylmercaptopropyl)triméthoxysilane, le (S-triméthylsilylmercaptopropyl)triéthoxysilane, le (S-tert-butyldiméthylsilylmercaptopropyl)triméthoxysilane, le (S-tert-butyldiméthylsilylmercaptopropyl)triéthoxysilane, le (S-triméthylsilylmercaptoethyl)triméthoxysilane, le (S-triméthylsilylmercaptoethyl)triéthoxysilane, le (S-tert-butyldiméthylsilylmercaptoethyl)triméthoxysilane, le (S-tert-butyldiméthylsilylmercaptoethyll)triéthoxysilane.

La fonction susceptible d'interagir avec une charge renforçante peut également être une fonction carboxylate. A titre de fonction carboxylate, on peut citer les acrylates ou les méthacrylates. Une telle fonction est de préférence un méthacrylate. Préférentiellement alors, l'agent de fonctionnalisation est choisi parmi le 3-(méthacryloyloxypropyl)triméthoxysilane, et le 3-(méthacryloyloxypropyl)triéthoxysilane.

La fonction susceptible d'interagir avec une charge renforçante peut également être une fonction époxyde. Préférentiellement alors, l'agent de fonctionnalisation est choisi parmi le 2-(glycidyloxyéthyl)triméthoxysilane, le 2-(glycidyloxyéthyl)triéthoxysilane le 3-(glycidyloxypropyl)triméthoxysilane, le 3-(glycidyloxypropyl)triéthoxysilane, le 2-(3,4-époxycyclohexyl)-éthyltriméthoxysilane, le 2-(3,4-époxycyclohexyl)-éthyltriéthoxysilane.

La fonction susceptible d'interagir avec une charge renforçante peut également être une fonction phosphine primaire, protégée ou non, secondaire, protégée ou non, ou tertiaire. Préférentiellement alors, l'agent de fonctionnalisation est choisi parmi le 3-(P,P-bistriméthylsilylphosphinopropyl)triméthoxysilane, le 3-(P,P-bistriméthylsilylphosphinopropyl)triéthoxysilane, le 3-(méthyltriméthylsilylphosphinopropyl)triméthoxysilane, le 3-(méthyltriméthylsilylphosphinopropyl)triéthoxysilane, le 3-(éthyltriméthylsilylphosphinopropyl)triméthoxysilane, le 3-(éthyltriméthylsilylphosphinopropyl)triéthoxysilane, le 3-(diméthylphosphinopropyl)triméthoxysilane, le 3-(diméthylphosphinopropyl)triéthoxysilane, le 3-(diéthylphosphinopropyl)triméthoxysilane, le 3-(diéthylphosphinopropyl)triéthoxysilane, le 3-(éthylméthylphosphinopropyl)triméthoxysilane, le 3-(éthylméthylphosphinopropyl)triéthoxysilane, le 3-(diphénylphosphinopropyl)triméthoxysilane, le 3-(diphénylphosphinopropyl)triéthoxysilane.

Il convient de préciser qu'il est connu de l'homme du métier que lorsqu'on modifie un élastomère par réaction d'un agent de fonctionnalisation sur l'élastomère vivant issu d'une étape de polymérisation anionique, on obtient un mélange d'espèces modifiées de cet élastomère dont la composition dépend notamment de la proportion de sites réactifs de l'agent de fonctionnalisation par rapport au nombre de chaînes élastomères vivantes. Ce mélange comprend des espèces fonctionnalisées en extrémité de chaîne, couplées, étoilées et/ou non fonctionnalisées.

Le rapport molaire de l'agent de fonctionnalisation au métal de l'initiateur de polymérisation dépend essentiellement du type d'élastomère diénique modifié voulu. Ainsi, avec un rapport allant de 0,40 à 0,75, voire de 0,45 à 0,65, ou encore de 0,45 à 0,55, on privilégie la formation d'espèces couplées au sein de l'élastomère modifié, le groupe silyle se situant alors en milieu de chaîne. De la même manière, avec un rapport allant de 0,15 à 0,40, voire de 0,20 à 0,35, ou encore de 0,30 à 0,35, on forme majoritairement des espèces étoilées (3 branches) au sein de l'élastomère modifié. Avec un rapport supérieur ou égal à 0,75, voire supérieur à 1, on forme majoritairement des espèces fonctionnalisées en bout de chaîne.

Selon une mise en œuvre particulièrement préférée de l'invention, le rapport molaire entre l'agent de fonctionnalisation et l'initiateur de polymérisation varie de 0,35 à 0,65, préférentiellement de 0,40 à 0,60 et encore plus préférentiellement de 0,45 à 0,55.

Selon une variante de préparation de l'élastomère diénique modifié de l'invention, l'élastomère vivant issu de l'étape de polymérisation anionique peut, par exemple préalablement à l'étape de fonctionnalisation, être soumis à une étape d'étoilage par réaction avec un agent d'étoilage. Les agents d'étoilage sont, à titre préférentiel des agents à base d'étain ou de silicium de fonctionnalité supérieure à 2. De tels agents d'étoilage sont connus de l'homme du métier. Ils comprennent non seulement des composés trihalogénés de l'étain et du silicium tels SnR₁X'₃, SnHX'₃, SiR₁X'₃, SiHX'₃, mais encore SnX'₄, SiX'₄, voire également des trialcoxysilanes, substitués ou non par une fonction. Dans ces formules R₁ est un groupement alkyle, aralkyle possédant de 1 à 20 atomes de carbone et X' un halogène.

Selon un mode de préparation particulièrement avantageux de l'élastomère diénique modifié selon l'invention, l'agent de fonctionnalisation et l'agent d'étoilage sont un seul et même composé. Selon ce mode de préparation, la fonctionnalisation peut alors avantageusement s'effectuer en continu et notamment selon les modes opératoires décrits dans la demande WO 2015018599 A1.

Selon un autre mode de préparation de l'élastomère diénique modifié selon l'invention, l'agent de fonctionnalisation et l'agent d'étoilage sont distincts. Selon ce mode de réalisation particulier, l'étoilage de l'élastomère diénique vivant issu de l'étape de polymérisation peut s'effectuer dans un premier temps, à une température variant de 20 à 120°C. Puis, dans un deuxième temps, on fonctionnalise les chaînes vivantes restantes de l'élastomère diénique obtenu après la première étape par adjonction d'un agent de fonctionnalisation susceptible d'introduire au sein de la structure de l'élastomère le groupe alcoxysilane porteur ou non d'une autre fonction.

Selon les variantes de l'invention selon lesquelles l'agent de fonctionnalisation est porteur d'une fonction amine primaire protégée ou amine secondaire protégée, le procédé de synthèse peut se poursuivre par une étape de déprotection de l'amine primaire ou secondaire. Cette étape est mise en œuvre après la réaction de modification. On peut à titre d'exemple faire réagir les chaînes fonctionnalisées par le groupement amine protégé avec un acide, une base, un dérivé fluoré tel le fluorure de tétrabutylammonium, un sel d'argent tel que le nitrate d'argent, etc...pour déprotéger cette fonction amine. Ces différentes méthodes sont décrites dans l'ouvrage « Protective Groups in Organic Synthesis, T. W. Green, P. G. M. Wuts, Third Edition,1999 ». Cette étape de déprotection peut avoir pour effet d'hydrolyser tout ou partie des fonctions alcoxysilanes hydrolysables de l'élastomère diénique modifié pour les transformer en fonctions silanol.

Selon les variantes de l'invention selon lesquelles l'agent de fonctionnalisation est porteur d'une fonction thiol protégée, le procédé de synthèse peut se poursuivre par une étape de déprotection du thiol. Cette étape est mise en œuvre après la réaction de modification. On peut à titre d'exemple faire réagir les chaînes fonctionnalisées par le groupement thiol protégé avec de l'eau, un alcool, ou un acide (acide chlorhydrique, acide sulfurique, acide carboxylique). Cette étape de déprotection peut avoir pour effet d'hydrolyser tout ou partie des fonctions alcoxysilanes hydrolysables de l'élastomère diénique modifié pour les transformer en fonctions silanol.

Selon les variantes de l'invention selon lesquelles l'agent de fonctionnalisation est porteur d'une fonction phosphine primaire ou secondaire protégée, le procédé de synthèse peut se poursuivre par une étape de déprotection de la phosphine. Cette étape est mise en œuvre après la réaction de modification. On peut à titre d'exemple faire réagir les chaînes fonctionnalisées par le groupement phosphine protégé avec de l'eau, un alcool, ou un acide (acide chlorhydrique, acide sulfurique, acide carboxylique). Cette étape de déprotection peut avoir pour effet d'hydrolyser tout ou partie des fonctions alcoxysilanes hydrolysables de l'élastomère diénique modifié pour les transformer en fonctions silanol.

Selon des variantes de l'invention, le procédé de synthèse peut comprendre une étape d'hydrolyse des fonctions alcoxysilanes hydrolysables, par adjonction d'un composé acide, basique ou neutre tel que décrit dans le document EP 2 266 819 A1. Les fonctions hydrolysables sont alors transformées en totalité ou en partie en fonction silanol. Au moins 50%, voire au moins 80% et jusqu'à 100% molaire des fonctions peuvent ainsi être hydrolysées.

Le procédé de synthèse de l'élastomère diénique modifié selon l'invention peut se poursuivre de manière connue en soi par les étapes de récupération de l'élastomère modifié.

Selon des variantes de ce procédé, ces étapes comprennent une étape de stripping en vue de récupérer l'élastomère issu des étapes antérieures sous forme sèche. Cette étape de stripping peut avoir pour effet d'hydrolyser tout ou partie des fonctions alcoxysilanes hydrolysables de l'élastomère diénique modifié pour les transformer en fonctions silanol. Avantageusement, au moins 50% molaire des fonctions peuvent ainsi être hydrolysées.

L'homme du métier comprendra que ces étapes sont combinables entre elles sous réserve de compatibilité. Ainsi, le procédé de synthèse de l'élastomère diénique modifié selon l'invention peut comprendre toutes ou partie de ces étapes de déprotection, hydrolyse spécifique et stripping qui suivent l'étape de modification.

Selon l'invention, l'élastomère diénique modifié peut être, selon différentes variantes, utilisé seul dans la composition ou en coupage avec au moins un autre élastomère diénique conventionnel, qu'il soit étoilé, couplé, fonctionnalisé ou non. Préférentiellement, cet autre élastomère diénique utilisé dans l'invention est choisi dans le groupe des élastomères diéniques constitué par les polybutadiènes (BR), les polyisoprènes (IR) de synthèse, le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères de butadiène-éthylène, les copolymères d'isoprène-butadiène (BIR), les copolymères d'isoprène-styrène (SIR) et les copolymères d'isoprène-butadiène-styrène (SBIR). On peut également envisager un coupage avec tout élastomère synthétique autre que diénique, voire avec tout polymère autre qu'élastomère, par exemple un polymère thermoplastique.

Lorsque l'élastomère conventionnel utilisé en coupage est du caoutchouc naturel et/ou un ou plusieurs polymères diéniques comme par exemple les polybutadiènes, les polyisoprènes, les copolymères butadiène-styrène ou butadiène-styrène-isoprène, cet élastomère ou ces élastomères, modifiés ou non, peuvent alors être présents de 1 à 70 parties en poids pour 100 parties d'élastomère diénique modifié selon l'invention, préferentiellement de 1 à 40 parties pour 100 parties de l'élastomère diénique modifié selon l'invention

On notera que l'amélioration des propriétés de la composition selon l'invention sera d'autant plus élevée que la proportion du ou des élastomères différents des élastomères diéniques modifiés de l'invention dans cette composition sera réduite.

Ainsi, de préférence, la matrice élastomère comprend majoritairement en masse l'élastomère diénique modifié selon l'invention. Plus préférentiellement, la matrice élastomère est uniquement constituée de l'élastomère diénique modifié selon l'invention.

La composition de caoutchouc de l'invention comprend, outre au moins une matrice élastomère telle que décrit ci-dessus, au moins une charge renforçante.

On peut utiliser tout type de charge renforçante connue pour ses capacités à renforcer une composition de caoutchouc utilisable pour la fabrication de bandes de roulement de pneumatiques, par exemple du noir de carbone, une charge inorganique renforçante, telle que de la silice , à laquelle est associé de manière connue un agent de couplage, ou encore un mélange de ces deux types de charge.

Par « charge inorganique renforçante » doit être entendu dans la présente demande, par définition, toute charge inorganique ou minérale quelles que soient sa couleur et son origine (naturelle ou de synthèse), capable de renforcer à elle seule, sans autre moyen qu'un agent de couplage intermédiaire, une composition de caoutchouc destinée à la fabrication de pneumatiques; une telle charge se caractérise généralement, de manière connue, par la présence de groupes hydroxyle (-OH) à sa surface.

Comme charges inorganiques renforçantes conviennent notamment des charges minérales du type siliceux, en particulier de la silice (SiO2), ou du type alumineuse, en particulier de l'alumine (A12O3). La silice utilisée peut être toute silice renforçante connue de l'homme du métier, notamment toute silice précipitée ou pyrogénée présentant une surface BET ainsi qu'une surface spécifique CTAB toutes deux inférieures à 450 m2/g, de préférence de 30 à 400 m2/g, notamment entre 60 et 300 m2/g, encore plus préférentiellement entre 130 et 300 m²/g, voire entre 130 et 250 m²/g. On citera également les charges minérales du type alumineux, en particulier de l'alumine (Al2O3) ou des (oxyde)hydroxydes d'aluminium, ou encore des oxydes de titane renforçants, par exemple décrits dans US 6 610 261 et US 6 747 087. Comme charges renforçantes conviennent également des charges renforçantes d'une autre nature, notamment du noir de carbone, dès lors que ces charges renforçantes seraient recouvertes d'une couche siliceuse, ou bien comporteraient à leur surface des sites fonctionnels, notamment hydroxyles, nécessitant l'utilisation d'un agent de couplage pour établir la liaison entre la charge et l'élastomère. A titre d'exemple, on peut citer par exemple des noirs de carbone pour pneumatiques tels que décrits par exemple dans les documents brevet WO 96/37547, WO 99/28380.

L'état physique sous lequel se présente la charge inorganique renforçante est indifférent, que ce soit sous forme de poudre, de microperles, de granulés, de billes ou toute autre forme densifiée appropriée. Bien entendu, on entend également par charge inorganique renforçante des mélanges de différentes charges renforçantes, en particulier de charges siliceuses hautement dispersibles.

De manière préférentielle, le taux de charge renforçante totale (noir de carbone et/ou autre charge renforçante) est compris entre 10 et 200 pce, plus préférentiellement entre 30 et 155 pce, et encore plus préférentiellement entre 50 et 155 pce, l'optimum étant de manière connue différent selon les applications particulières visées. Selon certaines variantes de l'invention, le taux de charge renforçante totale est compris entre 60 et 125 pce. Selon d'autres variantes de l'invention, le taux de charge renforçante totale est compris entre 50 et 95 pce.

Selon une variante de l'invention, la charge renforçante est majoritairement autre que du noir de carbone, c'est-à-dire qu'elle comprend plus de 50% en poids du poids total de la charge renforçante, d'une ou de plusieurs charges autres que du noir de carbone, notamment une charge inorganique renforçante telle que la silice, voire elle est exclusivement constituée d'une telle charge.

Selon cette variante, lorsque du noir de carbone est également présent, il peut être utilisé à un taux inférieur à 20 pce, plus préférentiellement inférieur à 10 pce (par exemple entre 0,5 et 20 pce, notamment de 1 à 10 pce). Comme noirs de carbone conviennent alors les noirs de carbone, utilisés individuellement ou sous forme de mélanges, notamment les noirs du type HAF, ISAF, SAF conventionnellement utilisés dans les bandes de roulement des pneumatiques (noirs dits de grade pneumatique). Parmi ces derniers, on citera plus particulièrement les noirs de carbone renforçants des séries 100, 200 ou 300 (grades ASTM), comme par exemple les noirs N115, N134, N234, N326, N330, N339, N347, N375

Lorsque la charge renforçante comprend une charge nécessitant l'utilisation d'un agent de couplage pour établir la liaison entre la charge et l'élastomère, la composition de caoutchouc selon l'invention comprend en outre, de manière classique, un agent susceptible d'assurer efficacement cette liaison. Lorsque la silice est présente dans la composition à titre de charge renforçante, on peut utiliser comme agents de couplage des organosilanes, notamment des alkoxysilanes polysulfurés ou des mercaptosilanes, ou encore des polyorganosiloxanes au moins bifonctionnels. Ces composés sont bien connus de l'homme du métier.

Un tel agent de couplage ne doit pas être confondu avec l'agent susceptible de coupler l'élastomère diénique et utilisé pour la synthèse de l'élastomère diénique modifié décrite précédemment.

Dans la composition selon l'invention, le taux d'agent de couplage est avantageusement inférieur à 20 pce, étant entendu qu'il est en général souhaitable d'en utiliser le moins possible. Son taux est préférentiellement compris entre 0,5 et 12 pce. La présence de l'agent de couplage dépend de celle de la charge inorganique renforçante. Son taux est aisément ajusté par l'homme du métier selon le taux de cette charge; il est typiquement de l'ordre de 0,5% à 15% en poids par rapport à la quantité de charge inorganique renforçante.

La composition de caoutchouc selon l'invention peut également contenir, en complément des agents de couplage, des activateurs de couplage, des agents de recouvrement des charges ou plus généralement des agents d'aide à la mise en œuvre susceptibles de manière connue, grâce à une amélioration de la dispersion de la charge dans la matrice de caoutchouc et à un abaissement de la viscosité de la composition, d'améliorer sa faculté de mise en œuvre à l'état cru, ces agents étant par exemple des silanes hydrolysables tels que des alkylalkoxysilanes, des polyols, des polyéthers, des amines primaires, secondaires ou tertiaires, des polyorganosiloxanes hydroxylés ou hydrolysables.

Les compositions de caoutchouc conformes à l'invention peuvent également contenir des charges organiques renforçantes qui peuvent remplacer tout ou partie des noirs de carbone ou des autres charges inorganiques renforçantes décrites plus haut. Comme exemples de charges organiques renforçantes, on peut citer les charges organiques de polyvinyle fonctionnalisé telles que décrites dans les demandes WO-A-2006/069792, WO-A-2006/069793, WO-A-2008/003434 et WO-A-2008/003435.

La composition de caoutchouc selon l'invention comporte également un système de réticulation à base soit de soufre, soit de donneurs de soufre et/ou de peroxyde et/ou de bismaléimides. Le système de réticulation peut également comporter des accélérateurs de vulcanisation ou des activateurs de vulcanisation.

La composition de caoutchouc selon l'invention comporte également un système plastifiant. Par système plastifiant, on entend selon l'invention un ou plusieurs plastifiants choisis parmi les plastifiants liquides et les plastifiants solides.

Un plastifiant solide est une résine hydrocarbonée dont la Tg est supérieure à 0°C, de préférence supérieure à + 20°C.

De manière connue de l'homme du métier, la dénomination "résine " est réservée dans la présente demande, par définition, à un composé thermoplastique qui est un solide à température ambiante (23°C), par opposition à un composé plastifiant liquide tel qu'une huile.

Les résines hydrocarbonées sont des polymères bien connus de l'homme du métier, essentiellement à base de carbone et hydrogène mais pouvant comporter d'autres types d'atomes, utilisables en particulier comme agents plastifiants ou agents tackifiants dans des matrices polymériques. Elles sont par nature miscibles (i.e., compatibles), au moins partiellement, aux taux utilisés avec les compositions de polymères auxquelles elles sont destinées, de manière à agir comme de véritables agents diluants. Elles ont été décrites par exemple dans l'ouvrage intitulé "Hydrocarbon Resins" de R. Mildenberg, M. Zander et G. Collin (New York, VCH, 1997, ISBN 3-527-28617-9) dont le chapitre 5 est consacré à leurs applications, notamment en caoutchouterie pneumatique (5.5. "Rubber Tires and Mechanical Goods"). Elles peuvent être aliphatiques, cycloaliphatiques, aromatiques, aromatiques hydrogénées, du type aliphatique/aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole). Leur Tg est de préférence supérieure à 0°C, notamment supérieure à 20°C (le plus souvent comprise entre 30°C et 95°C).

Un plastifiant liquide est un agent plastifiant liquide (à 23°C) dont la fonction est de ramollir la matrice en diluant l'élastomère et la charge renforçante ; sa Tg est préférentiellement inférieure à -20°C, plus préférentiellement inférieure à - 40°C.

Toute huile d'extension, qu'elle soit de nature aromatique ou non-aromatique, tout agent plastifiant liquide connu pour ses propriétés plastifiantes vis-à-vis d'élastomères diéniques, est utilisable. A température ambiante (23°C), ces plastifiants ou ces huiles, plus ou moins visqueux, sont des liquides (c'est-à-dire, pour rappel, des substances ayant la capacité de prendre à terme la forme de leur contenant), par opposition notamment aux résines plastifiantes hydrocarbonées qui sont par nature solides à température ambiante.

Conviennent particulièrement les agents plastifiants liquides choisis dans le groupe constitué par les polymères diéniques liquides, les huiles polyoléfiniques, les huiles naphténiques, les huiles paraffiniques, les huiles DAE, les huiles MES (Médium Extracted Solvates), les huiles TDAE (Treated Distillate Aromatic Extracts), les huiles RAE (Residual Aromatic Extract oils), les huiles TRAE (Treated Residual Aromatic Extract) et les huiles SRAE (Safety Residual Aromatic Extract oils), les huiles minérales, les huiles végétales, les plastifiants éthers, les plastifiants esters, les plastifiants phosphates, les plastifiants sulfonates et les mélanges de ces composés. Selon un mode de réalisation plus préférentiel, l'agent plastifiant liquide est choisi dans le groupe constitué par les huiles MES, les huiles TDAE, les huiles naphténiques, les huiles végétales et les mélanges de ces huiles.

Le taux de système plastifiant est préférentiellement compris entre 0 et 200 pce, plus préférentiellement dans un domaine de 10 à 150 pce, encore plus préférentiellement entre 20 et 100pce.

La composition de caoutchouc selon l'invention peut comporter également tout ou partie des additifs usuels habituellement utilisés dans les compositions d'élastomères destinées à la fabrication de pneumatiques, comme par exemple des pigments, des charges non renforçantes, des agents de protection tels que cires anti-ozone, anti-ozonants chimiques, anti-oxydants, des agents anti-fatigue, des agents plastifiants liquides tels que des huiles, des résines renforçantes, des accepteurs (par exemple résine phénolique novolaque) ou des donneurs de méthylène (par exemple HMT ou H3M) tels que décrits par exemple dans la demande WO 02/10269.

La composition est fabriquée dans des mélangeurs appropriés, en utilisant deux phases de préparation successives bien connues de l'homme du métier : une première phase de travail ou malaxage thermomécanique (phase dite "non-productive") à haute température, jusqu'à une température maximale comprise entre 110°C et 190°C, de préférence entre 130°C et 180°C, suivie d'une seconde phase de travail mécanique (phase dite "productive") jusqu'à une plus basse température, typiquement inférieure à 110°C, par exemple entre 40°C et 100°C, phase de finition au cours de laquelle est incorporé le système de réticulation.

Le procédé de préparation d'une composition selon l'invention, comprend généralement :
(i) la réalisation, à une température maximale comprise entre 130 °C et 180 °C, d'un premier temps de travail thermo-mécanique des constituants de la composition comprenant l'élastomère diénique modifié selon l'invention et une charge renforçante, à l'exception d'un système de réticulation, puis
(ii) la réalisation, à une température inférieure à ladite température maximale dudit premier temps, d'un second temps de travail mécanique au cours duquel est incorporé ledit système de réticulation.

Ce procédé peut également comprendre, préalablement à la réalisation des étapes (i) et (ii) précitées, les étapes de la préparation de l'élastomère diénique modifié selon le procédé décrit plus haut.

L'invention a également pour objet un article semi-fini en caoutchouc pour pneumatique, comprenant une composition de caoutchouc selon l'invention, réticulable ou réticulée, ou constitué d'une telle composition.

La composition finale ainsi obtenue peut ensuite être calandrée, par exemple sous la forme d'une feuille, d'une plaque ou encore extrudée, par exemple pour former un profilé de caoutchouc utilisable comme produit semi-fini en caoutchouc destiné au pneumatique.

La composition de caoutchouc renforcée selon l'invention peut se présenter à l'état réticulé ou à l'état non réticulé, autrement dit réticulable.

En raison de l'amélioration des propriétés hystérèse qui caractérise une composition de caoutchouc renforcée selon l'invention, on notera qu'une telle composition peut constituer tout produit semi-fini du pneumatique et tout particulièrement la bande de roulement, diminuant notamment sa résistance au roulement.

L'invention a donc enfin pour objet un pneumatique comportant un article semi-fini selon l'invention, en particulier une bande de roulement.

Les caractéristiques précitées de la présente invention, ainsi que d'autres, seront mieux comprises à la lecture de la description suivante de plusieurs exemples de réalisation de l'invention, donnés à titre illustratif et non limitatif.

### Exemples

### Mesures et tests utilisés

### Chromatographie d'exclusion stérique

La technique SEC (Size Exclusion Chromatography) permet de séparer les macromolécules en solution suivant leur taille à travers des colonnes remplies d'un gel poreux. Les macromolécules sont séparées suivant leur volume hydrodynamique, les plus volumineuses étant éluées en premier.

Sans être une méthode absolue, la SEC permet d'appréhender la distribution des masses molaires d'un polymère. A partir de produits étalons commerciaux, les différentes masses molaires moyennes en nombre (Mn) et en poids (Mw) peuvent être déterminées et l'indice de polymolécularité (Ip = Mw/Mn) calculé via un étalonnage dit de MOORE. Une courbe d'étalonnage reliant le logarithme de la masse molaire (logM) au temps d'élution (te) est préalablement réalisée avec des étalons, et modélisée.

Pour les élastomères, il n'y a pas de traitement particulier de l'échantillon de polymère avant analyse. Celui-ci est simplement solubilisé dans le solvant d'élution à une concentration d'environ 1 g.L-1. Puis la solution est filtrée sur filtre de porosité 0,45µm avant injection.

L'appareillage utilisé est une chaîne chromatographique "WATERS alliance". Le solvant d'élution est soit le tétrahydrofurane, soit le tétrahydrofurane + 1%vol. de diisopropylamine + 1%vol. de triéthylamine, le débit de 1 mL.min-1, la température du système de 35° C et la durée d'analyse de 30 min. Un jeu de deux colonnes WATERS de dénomination commerciale "STYRAGEL HT6E" est utilisé. Le volume injecté de la solution de l'échantillon de polymère est 100 µL. Le détecteur est un réfractomètre différentiel "WATERS 2410" et le logiciel d'exploitation des données chromatographiques est le système "WATERS EMPOWER".

Les masses molaires moyennes calculées sont relatives à une courbe d'étalonnage réalisée pour des SBR de microstructure suivante : 25% massique (par rapport à la masse du polymère) de motifs type styrène, 23% massique (par rapport à la partie butadiénique) de motifs type 1-2 et 50% massique (par rapport à la partie butadiénique) de motifs type 1-4 trans.

### Viscosité Mooney

Pour les polymères et les compositions de caoutchouc, les viscosités Mooney ML(1+4)100 °C sont mesurées selon la norme ASTM D-1646.

Un consistomètre oscillant est utilisé tel que décrit dans la norme ASTM D-1646. La mesure de plasticité Mooney se fait selon le principe suivant : l'élastomère ou la composition à l'état cru (i.e. avant cuisson) est moulé(e) dans une enceinte cylindrique chauffée à 100 °C. Après une minute de préchauffage, le rotor tourne au sein de l'éprouvette à 2 tours/minute et le couple utile pour entretenir ce mouvement après 4 minutes de rotation est mesuré. La plasticité Mooney ML(1+4) est exprimée en "unité Mooney" (UM, avec 1 UM = 0,83 N.m).

La différence entre la viscosité Mooney de la composition et la viscosité Mooney de l'élastomère permet de mesurer la processabilité ou mise en œuvre à cru. Plus cette différence est faible, meilleure est la mise en œuvre à cru.

### Calorimétrie différentielle

Les températures de transition vitreuse (Tg) des élastomères sont déterminées à l'aide d'un calorimètre différentiel ("differential scanning calorimeter"), selon la norme ASTM E1356-08 (2014).

### Spectroscopie proche infrarouge (NIR)

La microstructure des élastomères est caractérisée par la technique de spectroscopie proche infrarouge (NIR).

La spectroscopie proche infrarouge (NIR) est utilisée pour déterminer quantitativement le taux massique de styrène dans l'élastomère ainsi que sa microstructure (répartition relative des unités butadiène 1,2, 1,4-trans et 1,4 cis). Le principe de la méthode repose sur la loi de Beer-Lambert généralisée à un système multicomposants. La méthode étant indirecte, elle fait appel à un étalonnage multivarié [Vilmin, F.; Dussap, C.; Coste, N. Applied Spectroscopy 2006, 60, 619-29] réalisé à l'aide d'élastomères étalons de composition déterminée par RMN 13C. Le taux de styrène et la microstructure sont alors calculés à partir du spectre NIR d'un film d'élastomère d'environ 730 µm d'épaisseur. L'acquisition du spectre est réalisée en mode transmission entre 4000 et 6200 cm-1 avec une résolution de 2 cm-1, à l'aide d'un spectromètre proche infrarouge à transformée de Fourier Bruker Tensor 37 équipé d'un détecteur InGaAs refroidi par effet Peltier.

### Propriétés dynamiques

Les propriétés dynamiques, et en particulier tan δ max, sont mesurées sur un viscoanalyseur (Metravib VA4000), selon la norme ASTM D 5992-96. On enregistre la réponse d'un échantillon de composition vulcanisée (éprouvette cylindrique de 2 mm d'épaisseur et de 79 mm² de section), soumis à une sollicitation sinusoïdale en cisaillement simple alterné, à la fréquence de 10Hz, dans les conditions normales de température (23°C) selon la norme ASTM D 1349-99. On effectue un balayage en amplitude de déformation de 0,1% à 50% crête-crête (cycle aller), puis de 50% à 0,1% crête-crête (cycle retour). Le résultat plus particulièrement exploité est le facteur de perte tan δ. Pour le cycle retour, on indique la valeur maximale de tan δ observée, noté tan δ max. Cette valeur est représentative de l'hystérèse du matériau et dans le cas présent de la résistance au roulement : plus la valeur de tan δ max est faible, plus la résistance au roulement est basse. Dans les exemples, les résultats des propriétés dynamiques sont donnés en base 100. Plus ce nombre est élevé, plus l'hystérèse est élevée.

### Synthèse des élastomères diéniques modifiés

Les élastomères diéniques modifiés sont synthétisés selon le procédé ci-dessous.

Dans un ou deux réacteur(s) alimenté(s) en continu agité(s), supposé(s) parfaitement agité(s) selon l'homme de l'art, sont introduits en continu du méthylcyclohexane, du butadiène, du styrène et du tétrahydrofurfuryl éthyle éther, selon les proportions reportées dans le tableau suivant. Du n-butyllithium (n-BuLi) est introduit en quantité suffisante afin de neutraliser les impuretés protiques apportées par les différents constituants présents dans l'entrée du premier réacteur. A l'entrée du réacteur ou du premier réacteur, la quantité en µmol de n-BuLi pour 100 g de monomère introduits est reportée dans le tableau.

A la sortie du réacteur de polymérisation ou du deuxième réacteur de polymérisation, le cas échéant, un prélèvement de solution de polymère est effectué. Le polymère ainsi obtenu est soumis à un traitement anti-oxydant avec ajout de 0,4 pce de 2,2'-méthylène-bis-(4-méthyl-6-tertiobutylphénol) et 0,2 pce de N-(1,3-diméthylbutyl)-N'-phényl-p-phénylènediamine. Le polymère ainsi traité est ensuite séparé de sa solution par une opération de stripping à la vapeur d'eau, puis séché sur un outil à cylindres à 100 °C.

En sortie du réacteur de polymérisation ou du deuxième réacteur de polymérisation, le cas échéant, du 3-(N,N-diméthylaminopropyl)triméthoxysilane (Agent de couplage et d'étoilage AdC) en solution dans le méthylcyclohexane est ajouté à la solution de polymère vivant selon les proportions reportées dans le tableau suivant permettant d'obtenir un rapport Agent de fonctionnalisation à l'initiateur de polymérisation de 0,52

| Polymères | A | B | C | D | E | F |
|---|---|---|---|---|---|---|
| % massique styrène | 30 | 33 | 19 | 19 | 3 | 3.5 |
| % massique butadiène | 70 | 66 | 81 | 81 | 97 | 96.5 |
| concentration massique en monomère (%) | 11 | 11 | 11 | 11 | 11 | 11 |
| tétrahydrofurfuryl éthyle éther (ppm) | 60 | 20 | 60 | 20 | 15 | 8 |
| n-BuLi pour 100 g de monomère (µmol) | 929 | 807 | 750 | 740 | 720 | 770 |
| Nombre de réacteurs en série | 1 | 2 | 1 | 2 | 1 | 2 |
| Température réacteur(/s) (°C) | 90 | 60/85 | 90 | 60/85 | 95 | 60/95 |
| Agent de fonctionnalisation pour 100g de monomère (µmol) | 474 | 420 | 390 | 385 | 375 | 400 |

Les élastomères ainsi obtenus sont soumis à un traitement anti-oxydant avec ajout de 0,4 pce de 2,2'-méthylène-bis-(4-méthyl-6-tertiobutylphénol) et 0,2 pce de N-(1,3-diméthylbutyl)-N'-phényl-p-phénylènediamine.

Les élastomères ainsi traités sont ensuite séparés de la solution par une opération de stripping à la vapeur d'eau, puis séchés sur un outil à cylindres à 100 °C.

Les élastomères diéniques modifiés obtenus précédemment ont les caractéristiques reportées dans le tableau ci-après.

| Polymères | A | B | C | D | E | F |
|---|---|---|---|---|---|---|
| Tg (°C) | -47 | - 49 | -65 | -65 | -88 | -88 |
| % 1,2/BR | 23.1 | 24.5 | 23.4 | 23 | 12.7 | 13 |
| % Styrène/SBR | 27.7 | 27.5 | 15.2 | 15.1 | 2.1 | 3.5 |
| Ip avant modification | 1.9 | 1.5 | 1.9 | 1.5 | 1.9 | 1.5 |
| Viscosité inhérente "initiale" | 1.48 | 1,34 | 1.76 | 1.63 | 1,98 | 1.77 |
| Viscosité inhérente "finale" | 1.87 | 1,81 | 2.26 | 2.20 | 2,52 | 2.39 |
| Rapport viscosité "finale"/viscosité "initiale" | 1,26 | 1,35 | 1.28 | 1.35 | 1,27 | 1.35 |
| Taux de couplé* | 77% | 77% | 78% | 78% | 77% | 80% |
| Taux d'étoilé* | 16% | 13% | 11% | 10% | 14% | 10% |
| Mooney | 56 | 56 | 72 | 70 | 70 | 67 |

| | | | | | | |
|---|---|---|---|---|---|---|
| * Les taux de couplé et d'étoilé sont déterminés selon les méthodes décrites dans la demande WO2017060395 pour les polymères synthétisés à 1 réacteur et WO2017001684 pour les polymères synthétisés à 2 réacteurs. | | | | | | |

### Compositions de caoutchouc :

Les élastomères A à F ont été utilisés pour la préparation de compositions de caoutchouc de type bande de roulement, comprenant chacune de la silice à titre de charge renforçante.

Chacune des compositions suivantes est réalisée, dans un premier temps, par un travail thermo-mécanique, puis, dans un second temps de finition, par un travail mécanique.

On introduit successivement, dans un mélangeur interne de laboratoire de type "Banbury', dont la capacité est de 400 cm3, qui est rempli à 70% et dont la température initiale est d'environ 90°C, l'élastomère, les deux tiers de la silice, le noir, l'agent de couplage et l'huile, puis, environ une minute plus tard, le reste de la charge renforçante, la résine, l'antioxydant, l'acide stéarique et la cire anti-ozone, puis, environ deux minutes plus tard le monoxyde de zinc.

On conduit l'étape de travail thermo-mécanique pendant 4 à 5 minutes, jusqu'à une température maximale de tombée de 160°C environ.

Le premier temps précité de travail thermo-mécanique est ainsi réalisé, étant précisé que la vitesse moyenne des palettes lors de ce premier temps est de 50 t/min.

On récupère le mélange ainsi obtenu, on le refroidit puis, dans un mélangeur externe (homo-finisseur), on ajoute le soufre et l'accélérateur à 30°C, en mélangeant encore le tout pendant une durée de 3 à 4 minutes (second temps précité de travail mécanique).

Les compositions ainsi obtenues sont ensuite calandrées, soit sous forme de plaques (d'une épaisseur allant de 2 à 3 mm) ou fines feuilles de caoutchouc, pour la mesure de leurs propriétés physiques ou mécaniques, soit sous la forme de profilés directement utilisables, après découpage et/ou assemblage aux dimensions souhaitées, par exemple comme produits semi-finis pour pneumatiques, en particulier pour des bandes de roulement.

La réticulation est effectuée à 150°C pendant 40 min.

### Formulations et mesures

La comparaison des caractéristiques des compositions est faite à microstructure et fonctionnalisation identiques des élastomères constituant tout ou partie de la matrice élastomère de ces compositions.

### Compositions CA et CB

Les compositions CA et CB présentent les formulations suivantes (exprimée en pce : parties pour cent parties d'élastomère)

| | CA | CB |
|---|---|---|
| Élastomère A | 100,00 | |
| Élastomère B | | 100 |
| NOIR DE CARBONE | 3,00 | 3,00 |
| SILICE | 70 | 70 |
| RESINE | 16,00 | 16,00 |
| ANTIOXYDANT | 2 | 2 |
| SILANE | 5,60 | 5,60 |
| ACIDE STEARIQUE | 2,00 | 2,00 |
| DPG | 1,40 | 1,40 |
| ZNO | 0,80 | 0,80 |
| CBS | 1,70 | 1,70 |
| SOUFRE | 1,00 | 1,00 |

*Noir de carbone ASTM grade N234 de Cabot Corporation*
*Silice Z1165MP de Rhodia, type HDS*
*Résine PR-383 de ExxonMobil chemicals*
*Antioxydant : N-(1,3-diméthylbutyl)-N'-phényl-p-phénylènediamine, de la société Flexsys*
*Silane TESPT Si69, de Degussa*
*DPG : Diphénylguanidine (« Perkacit » DPG de la société Flexsys)*
*CBS : N-cylohexyl-2-benzothiazol-sulfénamide (« Santocure CBS » de la société Flexsys)*

La différence des valeurs de tanδ_{max,23°C} entre les compositions CA et CB est reportée dans le tableau ci-après :

| | CA | CB |
|---|---|---|
| Tan delta max 23°C en base 100 | 100 | 98. |

On ne constate aucune variation significative de la caractéristique tanδ_{max,23°C} entre les compositions CA et CB.

### Compositions CC1 et CC2 et CD1 et CD2

Les compositions CC et CD présentent les formulations suivantes (exprimée en pce : parties pour cent parties d'élastomère)

| | CC1 | CD1 | CC2 | CD2 |
|---|---|---|---|---|
| Élastomère C | 100 | | 100 | |
| Élastomère D | | 100 | | 100 |
| NOIR DE CARBONE | 4,00 | 4,00 | 3,00 | 3,00 |
| SIL160MP | 110 | 110 | 70 | 70 |
| RESINE | 60 | 60 | 40 | 40 |
| ANTIOXYDANT | 3,80 | 3,80 | 2,75 | 2,75 |
| SILANE LIQUIDE | 8,80 | 8,80 | 5,60 | 5,60 |
| ACIDE STEARIQUE | 3,00 | 3,00 | 2,00 | 2,00 |
| DPG | 2,40 | 2,40 | 1,60 | 1,60 |
| ZNO | 0,90 | 0,90 | 0,90 | 0,90 |
| CBS | 2,30 | 2,30 | 2.4 | 2.4 |
| SOUFRE | 1,00 | 1,00 | 1,00 | 1,00 |

*Noir de carbone ASTM grade N234 de Cabot Corporation*
*Silice Z1165MP de Rhodia, type HDS*
*Résine PR-383 de ExxonMobil chemicals*
*Antioxydant : N-(1,3-diméthylbutyl)-N'-phényl-p-phénylènediamine, de la société Flexsys Silane TESPT Si69, de Degussa*
*DPG* : *Diphénylguanidine (« Perkacit » DPG de la société Flexsys)*
*CBS* : *N-cylohexyl-2-benzothiazol-sulfénamide (« Santocure CBS » de la société Flexsys)*

La différence des valeurs de tanδ_{max,23°C} entre les compositions CC et CD est reportée dans le tableau ci-après en prenant comme référence l'élastomère C dans chaque formule :

| | CC1 | CD1 | CC2 | CD2 |
|---|---|---|---|---|
| Tan delta max 23°C en base 100 | 100 | 95 | 100 | 91 |

On constate une variation significative de la caractéristique tanδ_{max,23°C} entre les compositions CC et CD.

### Compositions CE et CF

Les compositions CE et CF présentent les formulations suivantes (exprimée en pce : parties pour cent parties d'élastomère)

| | CE | CF |
|---|---|---|
| Elastomère E | 100 | |
| Elastomère F | | 100 |
| NOIR DE CARBONE | 4 | 4 |
| SILICE | 110 | 110 |
| ANTIOXYDANT | 3,9 | 3,9 |
| RESINE | 82 | 82 |
| SILANE LIQUIDE | 11 | 11 |
| ACIDE STEARIQUE | 3 | 3 |
| DPG | 2,4 | 2,4 |
| ZNO | 0,9 | 0,9 |
| CBS | 2,3 | 2,3 |
| SOUFRE | 0,9 | 0,9 |

*Noir de carbone ASTM grade N234 de Cabot Corporation*
*Silice Z1165MP de Rhodia, type HDS*
*Résine PR-383 de ExxonMobil chemicals*
*Antioxydant : N-(1,3-diméthylbutyl)-N'-phényl-p-phénylènediamine, de la société Flexsys Silane TESPT Si69, de Degussa*
*DPG : Diphénylguanidine (« Perkacit » DPG de la société Flexsys)*
*CBS : N-cylohexyl-2-benzothiazol-sulfénamide (« Santocure CBS » de la société Flexsys)*

La différence des valeurs de tanδ_{max,23°C} entre les compositions CE et CF est reportée dans le tableau ci-après :

| | CE | CF |
|---|---|---|
| Tan delta max 23°C en base 100 | 100 | 88 |

On constate une variation plus que significative de la caractéristique tanδ_{max,23°C} entre les compositions CE et CF.

### Résultats:

Les résultats reportés dans les tableaux 1 à 3 ci-dessus montrent que l'utilisation d'élastomère diéniques modifiés selon l'invention permet une amélioration significative et inattendue de l'hystérèse des compositions de caoutchouc les contenant par rapport à l'utilisation d'élastomère diéniques modifiés de microstructure identique et ayant subi la même modification. Ces résultats sont annonciateurs, dans le cas présent, d'une amélioration de la résistance au roulement d'un pneumatique comprenant, notamment en tant que bande de roulement, une composition selon l'invention.

## Revendications

1. Composition de caoutchouc à base d'au moins une charge renforçante, un système de réticulation, un système plastifiant et une matrice élastomère comprenant au moins un élastomère diénique modifié comprenant au sein de sa structure au moins un groupe alcoxysilane, éventuellement partiellement ou totalement hydrolysé en silanol, lié à l'élastomère par l'atome de silicium, le groupe alcoxysilane étant porteur ou non d'une autre fonction liée à l'atome de silicium directement ou par l'intermédiaire d'un groupe espaceur, lequel élastomère diénique modifié est tel qu'avant modification l'élastomère diénique présente un indice de polymolécularité d'au moins 1,1 et d'au plus 1,6 et présente une viscosité Mooney variant de 50 à 80, et une température de transition vitreuse (Tg) inférieure ou égale à -60°C, et supérieure ou égale à -110°C.

2. Composition selon la revendication 1, **caractérisée en ce que** l'élastomère diénique modifié présente une température de transition vitreuse (Tg) supérieure ou égale à -95°C et inférieure à -80°C.

3. Composition selon la revendication 1, **caractérisée en ce que** l'élastomère diénique modifié présente une température de transition vitreuse (Tg) supérieure ou égale à -80°C et inférieure ou égale à -60°C

4. Composition selon l'une quelconque des revendications précédentes, **caractérisée en ce que** dans l'élastomère diénique modifié le groupe alcoxysilane porte une autre fonction liée à l'atome de silicium par l'intermédiaire d'un groupe espaceur défini comme un radical hydrocarboné divalent, linéaire ou ramifié, aliphatique en C₁-C₁₈, saturé ou non, cyclique ou non, ou un radical hydrocarboné divalent aromatique en C₆-C₁₈, ledit groupement espaceur contenant éventuellement un ou plusieurs radicaux aromatiques et/ou un ou plusieurs hétéroatomes.

5. Composition selon l'une quelconque des revendications précédentes, **caractérisée** en ce l'élastomère diénique comprend au moins 70% en poids de l'élastomère diénique linéaire fonctionnalisé, par rapport au poids total de l'élastomère diénique modifié

6. Composition selon la revendication 5, **caractérisée en ce que** l'élastomère diénique linéaire fonctionnalisé est majoritairement fonctionnalisé en milieu de chaîne par le groupe alcoxysilane, éventuellement partiellement ou totalement hydrolysé en silanol, l'atome de silicium liant les deux branches de l'élastomère diénique.

7. Composition selon l'une quelconque des revendications précédentes, **caractérisée en ce que** l'élastomère diénique modifié comprend au plus 30% en poids, par rapport au poids total de l'élastomère diénique modifié, d'un l'élastomère diénique étoilé à l'étain ou au silicium.

8. Composition selon la revendication 7, **caractérisée en ce que** l'élastomère diénique est étoilé au silicium et l'atome de silicium lié directement à trois branches de l'élastomère diénique, est porteur d'une autre fonction.

9. Composition selon l'une quelconque des revendications précédentes, **caractérisée en ce que** l'autre fonction est une fonction amine primaire, protégée ou non, amine secondaire, protégée ou non, ou amine tertiaire, cycliques ou non, isocyanate, imine, cyano, thiol, protégée ou non, carboxylate, époxyde, phosphine primaire ou secondaires, protégées ou non, ou tertiaire.

10. Composition selon l'une quelconque des revendications précédentes, **caractérisée** en ce l'élastomère diénique modifié présente au moins une quelconque, au moins deux, au moins trois, au moins quatre ou au moins cinq, des caractéristiques suivantes, et de préférence toutes :
- l'élastomère diénique modifié comprend au moins 70%, de préférence au moins 75%, en poids de l'élastomère diénique linéaire fonctionnalisé majoritairement en milieu de chaîne, par rapport au poids total de l'élastomère diénique modifié
- l'élastomère diénique modifié comprend au plus 30%, de préférence au plus 25%, par rapport au poids total de l'élastomère diénique modifié, d'une espèce étoilée à trois branches par un groupe comprenant un atome de silicium porteur d'une autre fonction,
- l'autre fonction est une amine tertiaire, plus particulièrement un groupement diéthylamino- ou diméthylamino-,
- l'autre fonction est liée à l'atome de silicium par un groupement espaceur défini comme un radical hydrocarboné aliphatique linéaire, plus préférentiellement encore le radical hydrocarboné aliphatique linéaire en C₂ ou C₃,
- la fonction alcoxysilane est un méthoxysilane ou éthoxysilane, éventuellement partiellement ou totalement hydrolysé en silanol,
- l'élastomère diénique est un polymère de butadiène, plus particulièrement un homopolymère de butadiène ou un copolymère butadiène-styrène.

11. Composition selon la revendication 10 **caractérisée** en ce l'élastomère diénique modifié présente les caractéristiques suivantes :
- le groupe alcoxysilane est porteur d'une fonction amine tertiaire, plus particulièrement un groupement diéthylamino- ou diméthylamino-,
- l'élastomère diénique étoilée comprend un atome de silicium porteur d'une fonction amine tertiaire, plus particulièrement un groupement diéthylamino- ou diméthylamino-,
- le groupement espaceur est un radical hydrocarboné linéaire en C3,
- le groupe alcoxysilane est un méthoxysilane ou éthoxysilane, éventuellement partiellement ou totalement hydrolysé en silanol,
- l'élastomère diénique est un copolymère butadiène-styrène,
- l'élastomère diénique modifié comprend au moins 75% en poids de l'élastomère diénique linéaire fonctionnalisé majoritairement en milieu de chaîne et au plus 25% en poids de l'élastomère diénique étoilé, par rapport au poids total de l'élastomère diénique modifié.

12. Composition selon l'une quelconque des revendications précédentes, **caractérisée en ce que** la charge renforçante comprend plus de 50% en poids par rapport au poids total de la charge d'une charge de type siliceuse.

13. Composition selon l'une quelconque des revendications précédentes, **caractérisée en ce que** l'élastomère diénique modifié est un copolymère de butadiène-styrène et présente un taux d'unité vinylique par rapport à la portion diénique allant de 8 à 25% en poids, de préférence allant de 10 à 25% en poids, et un taux de styrène d'au plus 20% en poids par rapport au poids total de l'élastomère diénique modifié.

14. Article semi-fini en caoutchouc pour pneumatique, **caractérisé en ce qu'**il comprend une composition de caoutchouc réticulable ou réticulée selon l'une quelconque des revendications 1 à 13.

15. Pneumatique, **caractérisé en ce qu'**il comporte un article semi-fini tel que défini dans la revendication 14.

## Patentansprüche

1. Kautschukzusammensetzung auf Basis mindestens eines verstärkenden Füllstoffs, eines Vernetzungssystems und einer Elastomermatrix, die mindestens ein modifiziertes Dienelastomer umfasst, das in seiner Struktur mindestens eine Alkoxysilangruppe, die gegebenenfalls teilweise oder vollständig zu Silanol hydrolysiert ist und über das Siliciumatom an das Elastomer gebunden ist, wobei die Alkoxysilangruppe gegebenenfalls eine weitere Funktion trägt, die direkt oder über eine Spacergruppe an das Siliciumatom gebunden ist, wobei das modifizierte Dienelastomer so beschaffen ist, dass das Dienelastomer vor der Modifikation einen Polymolekularitätsindex von mindestens 1,1 und höchstens 1,6 aufweist und es eine Mooney-Viskosität im Bereich von 50 bis 80 und eine Glasübergangstemperatur (Tg) kleiner oder gleich -60 °C und größer oder gleich -110 °C aufweist.

2. Zusammensetzung nach Anspruch 1, **dadurch gekennzeichnet, dass** das modifizierte Dienelastomer eine Glasübergangstemperatur (Tg) größer oder gleich -95 °C und kleiner als -80 °C aufweist.

3. Zusammensetzung nach Anspruch 1, **dadurch gekennzeichnet, dass** das modifizierte Dienelastomer eine Glasübergangstemperatur (Tg) größer oder gleich -80 °C und kleiner als -60 °C aufweist.

4. Zusammensetzung nach einem der vorhergehenden Ansprüche, **dadurch gekennzeichnet, dass** die Alkoxysilangruppe in dem modifizierten Dienelastomer eine weitere Funktion trägt, die über eine Spacergruppe, die als ein cyclischer oder acyclischer, gesättigter oder ungesättigter, linearer oder verzweigter zweiwertiger aliphatischer C₁-C₁₈-Kohlenwasserstoffrest oder ein zweiwertiger aromatischer C₆-C₁₈-Kohlenwasserstoffrest definiert ist, an das Siliciumatom gebunden ist, wobei die Spacergruppe gegebenenfalls einen oder mehrere aromatische Reste und/oder ein oder mehrere Heteroatome enthält.

5. Zusammensetzung nach einem der vorhergehenden Ansprüche, **dadurch gekennzeichnet, dass** das Dienelastomer mindestens 70 Gew.-% des funktionalisierten linearen Dienelastomers, bezogen auf das Gesamtgewicht des modifizierten Dienelastomers, umfasst.

6. Zusammensetzung nach Anspruch 5, **dadurch gekennzeichnet, dass** das funktionalisierte lineare Dienelastomer hauptsächlich in der Kettenmitte durch die gegebenenfalls teilweise oder vollständig zu Silanol hydrolysierte Alkoxysilangruppe funktionalisiert ist, wobei das Siliciumatom die zwei Arme des Dienelastomers verbindet.

7. Zusammensetzung nach einem der vorhergehenden Ansprüche, **dadurch gekennzeichnet, dass** das modifizierte Dienelastomer höchstens 30 Gew.-%, bezogen auf das Gesamtgewicht des modifizierten Dienelastomers, eines mit Zinn oder mit Silicium sternverzweigten Dienelastomers umfasst.

8. Zusammensetzung nach Anspruch 7, **dadurch gekennzeichnet, dass** das Dienelastomer mit Silicium sternverzweigt ist und das Siliciumatom direkt an drei Arme des Dienelastomers gebunden ist und eine weitere Funktion trägt.

9. Zusammensetzung nach einem der vorhergehenden Ansprüche, **dadurch gekennzeichnet, dass** es sich bei der weiteren Funktion um eine gegebenenfalls geschützte Aminfunktion, gegebenenfalls geschützte sekundäre Aminfunktion oder tertiäre Aminfunktion, die gegebenenfalls cyclisch ist, oder Isocyanat-, Imin-, Cyano-, gegebenenfalls geschützte Thiol-, Carboxylat-, Epoxid-, gegebenenfalls geschützte primäre oder sekundäre Phosphin- oder tertiäre Phosphinfunktion handelt.

10. Zusammensetzung nach einem der vorhergehenden Ansprüche, **dadurch gekennzeichnet, dass** das modifizierte Dienelastomer mindestens eines, mindestens zwei, mindestens drei, mindestens vier oder mindestens fünf und vorzugsweise alle der folgenden Merkmale aufweist:
- das modifizierte Dienelastomer umfasst mindestens 70 Gew.-%, vorzugsweise mindestens 75 Gew.-%, des linearen Dienelastomers, das hauptsächlich in der Kettenmitte durch die gegebenenfalls teilweise oder vollständig zu Silanol hydrolysierte Alkoxysilangruppe funktionalisiert ist, bezogen auf das Gesamtgewicht des modifizierten Dienelastomers,
- das modifizierte Dienelastomer umfasst höchstens 30 %, vorzugsweise höchstens 25 %, bezogen auf das Gesamtgewicht des modifizierten Dienelastomers, einer durch eine Gruppe, die ein Siliciumatom, das eine weitere Funktion trägt, mit drei Armen sternverzweigten Spezies,
- bei der weiteren Funktion handelt es sich um ein tertiäres Amin, insbesondere eine Diethylamino-oder Dimethylaminogruppe,
- die weitere Funktion ist über eine Spacergruppe, die als ein linearer aliphatischer Kohlenwasserstoffrest, noch weiter bevorzugt der lineare aliphatische C₂- oder C₃-Rest, definiert ist, an das Siliciumatom gebunden,
- bei der Alkoxysilanfunktion handelt es sich um eine gegebenenfalls teilweise oder vollständig zu Silanol hydrolysierte Methoxysilan- oder Ethoxysilanfunktion,
- bei dem Dienelastomer handelt es sich um ein Butadienpolymer, insbesondere ein Butadien-Homopolymer oder ein Butadien-Styrol-Copolymer.

11. Zusammensetzung nach Anspruch 10, **dadurch gekennzeichnet, dass** das modifizierte Dienelastomer die folgenden Merkmale aufweist:
- die Alkoxysilangruppe trägt eine tertiäre Aminfunktion, spezieller eine Diethylamino- oder Dimethylaminogruppe,
- das sternverzweigte Dienelastomer umfasst ein Siliciumatom, das eine tertiäre Aminfunktion, spezieller eine Diethylamino- oder Dimethylaminogruppe, trägt,
- bei der Spacergruppe handelt es sich um einen linearen C3-Kohlenwasserstoffrest,
- bei der Alkoxysilangruppe handelt es sich um ein gegebenenfalls teilweise oder vollständig zu Silanol hydrolysiertes Methoxysilan oder Ethoxysilan,
- bei dem Dienelastomer handelt es sich um ein Butadien-Styrol-Copolymer,
- das modifizierte Dienelastomer umfasst mindestens 75 Gew.-% des linearen Dienelastomers, das hauptsächlich in der Kettenmitte funktionalisiert ist, und höchstens 25 Gew.-% des sternverzweigten Dienelastomers, bezogen auf das Gesamtgewicht des modifizierten Dienelastomers.

12. Zusammensetzung nach einem der vorhergehenden Ansprüche, **dadurch gekennzeichnet, dass** der verstärkende Füllstoff mehr als 50 Gew.-%, bezogen auf das Gesamtgewicht des Füllstoffs, eines siliciumhaltigen Füllstoffs umfasst.

13. Zusammensetzung nach einem der vorhergehenden Ansprüche, **dadurch gekennzeichnet, dass** es sich bei dem modifizierten Dienelastomer um ein Butadien-Styrol-Copolymer mit einem Gehalt an Vinyleinheiten, bezogen auf den Dienteil, im Bereich von 8 bis 25 Gew.-%, vorzugsweise im Bereich von 10 bis 25 Gew.-%, und einem Styrolgehalt von höchstens 20 Gew.-%, bezogen auf das Gesamtgewicht des modifizierten Elastomers, handelt.

14. Kautschuk-Halbzeug für Reifen, **dadurch gekennzeichnet, dass** es eine vernetzbare oder vernetzte Kautschukzusammensetzung nach einem der Ansprüche 1 bis 13 umfasst.

15. Reifen, **dadurch gekennzeichnet, dass** er ein Halbzeug gemäß Anspruch 14 umfasst.

## Claims

1. Rubber composition based on at least a reinforcing filler, a crosslinking system, a plasticizing system and an elastomer matrix comprising at least one modified diene elastomer comprising within its structure at least one alkoxysilane group, which is optionally partially or totally hydrolysed to silanol, bonded to the elastomer by the silicon atom, the alkoxysilane group optionally bearing another function bonded to the silicon atom directly or by means of a spacer group, which modified diene elastomer is such that the diene elastomer has a polydispersity index of at least 1.1 and at most 1.6 before modification, and has a Mooney viscosity ranging from 50 to 80 and a glass transition temperature (Tg) of less than or equal to -60°C, and greater than or equal to -110°C.

2. Composition according to Claim 1, **characterized in that** the modified diene elastomer has a glass transition temperature (Tg) of greater than or equal to -95°C and less than -80°C.

3. Composition according to Claim 1, **characterized in that** the modified diene elastomer has a glass transition temperature (Tg) of greater than or equal to -80°C and less than or equal to -60°C.

4. Composition according to any one of the preceding claims, **characterized in that**, in the modified diene elastomer, the alkoxysilane group bears another function bonded to the silicon atom by means of a spacer group defined as a saturated or unsaturated, cyclic or non-cyclic, linear or branched, divalent C₁-C₁₈ aliphatic hydrocarbon-based radical, or a divalent C₆-C₁₈ aromatic hydrocarbon-based radical, said spacer group optionally containing one or more aromatic radicals and/or one or more heteroatoms.

5. Composition according to any one of the preceding claims, **characterized in that** the diene elastomer comprises at least 70% by weight of the functionalized linear diene elastomer, relative to the total weight of the modified diene elastomer.

6. Composition according to Claim 5, **characterized in that** the functionalized linear diene elastomer is predominantly functionalized in the chain middle by the alkoxysilane group, which is optionally partially or totally hydrolysed to silanol, the silicon atom bonding the two branches of the diene elastomer.

7. Composition according to any one of the preceding claims, **characterized in that** the modified diene elastomer comprises at most 30% by weight, relative to the total weight of the modified diene elastomer, of a diene elastomer star-branched with tin or with silicon.

8. Composition according to Claim 7, **characterized in that** the diene elastomer is star-branched with silicon and the silicon atom bonded directly to three branches of the diene elastomer bears another function.

9. Composition according to according to any one of the preceding claims, **characterized in that** the other function is a protected or non-protected primary amine, protected or non-protected secondary amine, or tertiary amine function, which is cyclic or non-cyclic or an isocyanate, imine, cyano, protected or non-protected thiol, carboxylate, epoxide, protected or non-protected, primary or secondary phosphine, or tertiary phosphine function.

10. Composition according to any one of the preceding claims, **characterized in that** the modified diene elastomer has at least any one, at least two, at least three, at least four or at least five of the following features, and preferably all of the following features:
- the modified diene elastomer comprises at least 70%, preferably at least 75%, by weight of the linear diene elastomer functionalized predominantly in the chain middle, relative to the total weight of the modified diene elastomer,
- the modified diene elastomer comprises at most 30%, preferably at most 25%, relative to the total weight of the modified diene elastomer, of a species star-branched with three branches by a group comprising a silicon atom bearing another function,
- the other function is a tertiary amine, more particularly a diethylamino-or dimethylamino- group,
- the other function is bonded to the silicon atom by a spacer group defined as a linear aliphatic hydrocarbon-based radical, even more preferentially the linear C₂ or C₃ aliphatic hydrocarbon-based radical,
- the alkoxysilane function is a methoxysilane or an ethoxysilane, which is optionally partially or totally hydrolysed to silanol,
- the diene elastomer is a butadiene polymer, more particularly a butadiene homopolymer or a butadiene/styrene copolymer.

11. Composition according to Claim 10, **characterized in that** the modified diene elastomer has the following features:
- the alkoxysilane group bears a tertiary amine function, more particularly a diethylamino- or dimethylamino- group,
- the star-branched diene elastomer comprises a silicon atom bearing a tertiary amine function, more particularly a diethylamino- or dimethylamino-group,
- the spacer group is a linear C₃ hydrocarbon-based radical,
- the alkoxysilane group is a methoxysilane or ethoxysilane, which is optionally partially or totally hydrolysed to silanol,
- the diene elastomer is a butadiene/styrene copolymer,
- the modified diene elastomer comprises at least 75% by weight of the linear diene elastomer functionalized predominantly in the chain middle and at most 25% by weight of the star-branched diene elastomer, relative to the total weight of the modified diene elastomer.

12. Composition according to any one of the preceding claims,, **characterized in that** the reinforcing filler comprises more than 50% by weight, relative to the total weight of the filler, of a filler of siliceous type.

13. Composition according to any one of the preceding claims, **characterized in that** the modified diene elastomer is a butadiene/styrene copolymer and has a content of vinyl units relative to the diene portion ranging from 8% to 25% by weight, preferably ranging from 10% to 25% by weight, and a styrene content of at most 20% by weight relative to the total weight of the modified diene elastomer.

14. Semi-finished rubber article for tyres, **characterized in that** it comprises a crosslinkable or crosslinked rubber composition according to any one of Claims 1 to 13.

15. Tyre, **characterized in that** it comprises a semi-finished article as defined in Claim 14.
